# EUROPEAN PATENT APPLICATION

(11) **EP 1 768 392 A1**
(43) Date of publication of application: **28.03.2007**
(21) Application number: 05020571.5
(22) Date of filing: 21.09.2005
(51) Int. Cl.: H04N 5/44

(54) **Apparatus and method for converting a compressed sequence of digital images**

(71) Applicant: Fujitsu Microelectronics Europe GmbH, 63303 Dreieich-Buchschlag (DE)
(72) Inventor: Golov, Gil, 71522 Backnang (DE); Hutchison, Michael, 35580 Wetzlar (DE); Dorner, Albert, 77933 Lahr (DE); Richter, Johannes, 64285 Darmstadt (DE)
(74) Representative: Seeger, Wolfgang

(57) **Abstract**

The invention refers to an apparatus (16) for converting a compressed first sequence of digital images (CV) into an uncompressed second sequence of digital images (DV) to be displayed on a display, particularly on a flat panel display, comprising:
decoding means (19) for receiving and decoding the first sequence of digital images (CV);
control means (18) for receiving the decoded first sequence of digital images (IV) from the decoding means (19) and processing the decoded first sequence of digital images (IV) into the second sequence of digital images (DV);
shared memory means (21) for storing information from at least the decoding means (19), said shared memory means (21) being accessible for both the decoding means (19) and the control means (18) during operation.

## Description

### BACKROUND OF THE INVENTION

### 1. Area of the invention

The invention refers to an apparatus for converting a compressed first sequence of digital images into an uncompressed second sequence of digital images to be displayed on a display, particularly on a flat panel display. Furthermore, the invention refers to a corresponding method for converting a compressed first sequence of digital images into an uncompressed second sequence of digital images to be displayed on a display and to a computer program product including software code portions for performing the steps of the method when the product is run on a computer.

### 2. Description of the Related Art

In recent years, the transmission of digital images in the form of video streams has become more and more important in the field of information technology. Particularly, the transmission of digital video data via satellite, cable-TV, terrestrial TV, the transmission of video streams via the internet as well as the generation of DVD streams or any other form of digital videos is a very important area of application of digital image processing. As the transmission of digital video data is associated with a large amount of data, thus requiring a high data bandwidth, coding techniques have been developed in order to compress video data to a smaller data format.

In the prior art, several compression standards are known for coding and decoding digital video data. Commonly known compression standards are MPEG-2, MPEG-4 as well as H.264 which were developed by the "Moving Picture Experts Group".

In order to decompress compressed video data, so called compressed video decoders, for example operating in accordance with one of the aforementioned standards, are used. Those video decoders are often implemented in a stand alone chip or as a software implementation and generate an uncompressed sequence of digital images. In order to display such a sequence on a display, particularly on a flat panel display, the sequence generated by the video decoder has to be processed in a so called flat panel controller. In prior art apparatuses, a compressed video decoder and a flat panel controller form two separate components. As the data are handled separately by each component, high design and implementation complexity is required.

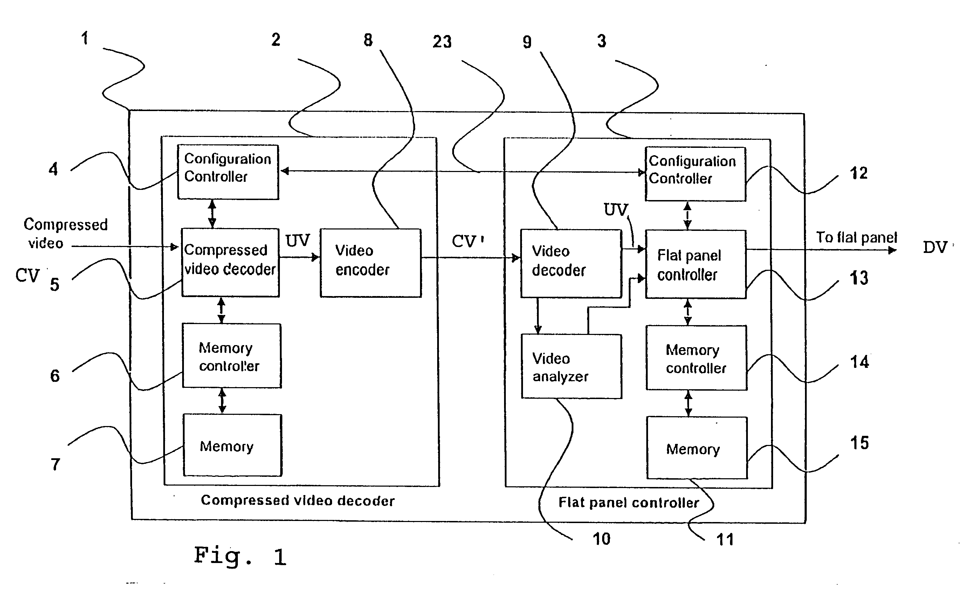

Figure 1 is a schematic diagram of an apparatus for generating video data to be displayed on a flat panel controller according to the prior art. This apparatus 1 includes a first chip 2 and a second chip 3. The first chip 2 comprises a compressed video decoder 5 receiving and decoding a sequence of digital images in the form of compressed video data CV. The video decoder is coupled to a field/frame memory 7 which is controlled by a corresponding memory controller 6. The memory and the memory controller are used by the decoder 5 in order to reconstruct a sequence of uncompressed video data UV from the compressed video data CV. Furthermore, a configuration controller 4 is coupled to the video decoder 5 in order to configure the operation mode of the decoder 5.

The compressed video stream CV contains reference video frames, often called I-frames, and other frames that indicate the changes compared to the reference frames and are often called P-frame and B-frame. In order to decode the video, the compressed video decoder 5 stores the reference frame in the memory 7 as a reference for restructuring the video frame from the P-frames and B-frames. The video decoder 5 sees the memory 7 as a linear structure of memory cells that can be accessed individually by using a specific linear address. However, the physical structure of the memory can be non-linear and sometimes packed into blocks that have a common access and specific signal timing requirements. Moreover, when using a dynamic memory, the memory cells need to be refreshed every interval in order to preserve their contents. The memory controller 6 is responsible for the refreshing and timing tasks and for converting the logical linear address range into the physical memory structure. The configuration controller 4 sends signals and parameters to the video decoder 5 in order to control the operation mode of the unit. Examples of control parameters are the bit rate of the video stream, decoding synchronization pulses, e.g. start, stop, pause, and the memory area that the compressed video decoder should use for decoding a specific new frame. Moreover, the memory controller 6 receives information from the compressed video decoder 5 on the decoded video frame, indicating specific information that are embedded within the video stream, e.g. copy protection, bit rate, error rate, the decoded video structure. The configuration controller 4 uses this information in order to perform special functions, e.g. a video descrambler.

In order to enable a communication of the video decoder 5 implemented in chip 2 with a flat panel controller implemented in chip 3, the apparatus of the prior art uses a video encoder 8 encoding once again the uncompressed video data UV. The video encoder generates compressed video data CV' which are received by a video decoder 9 implemented in chip 3. The video decoder 9 regenerates the uncompressed video data UV which are received by the flat panel controller 13 implemented in chip 3. The encoding of the uncompressed video data UV by the encoder 8 and the decoding of the compressed video data CV' by the decoder 9 are necessary because the connection between the compressed video decoder in chip 2 and the flat panel controller in chip 3 works according to a known standard. Particularly, the connection between the video encoder 8 and video decoder 9 is a common connection between video units/chips, and it normally follows one of the industry standards like ITU-656 or ITU-601 (ITU = International Telecommunication Union) which are well-known prior art standards.

The video decoder 9 is coupled to a video analyzer 10 which detects the video mode being used in the video data UV, e.g. the standard mode, the film/camera mode etc. The video analyzer sends the detected video mode to the flat panel controller 13. The flat panel controller performs several video processing stages in order to generate a video ready to be displayed on a flat panel display. Particularly, the flat panel controller performs de-interlacing in order to convert an interlaced video to a progressive scan video required by a flat panel display. Progressive scanning is a known method for representing moving images on a display screen wherein every pixel is represented in each image frame. Contrary to that, in an interlaced video, each frame is drawn in two fields, each field consisting of half of the lines in the video image frame. Furthermore, the flat panel controller performs scaling such that the number of the horizontal and vertical pixels defined for each panel matches with dimensions of the incoming video. Another task performed by the flat panel controller is frame rate conversion such that the refreshment frequency of the video frames (the so called vertical blanking frequency) in the original video matches with the panel requirements. In order to perform the aforementioned processing stages, the flat panel controller 13 is coupled to a memory 15 controlled by a memory controller 14 in order to perform intermediate processing and storing processed results. Furthermore, a system configuration controller 12 is coupled to the flat panel controller 13 in order to configure the operation mode of the flat panel controller.

The configuration controller 12 sends parameters for the operation of the flat panel controller. An example for these parameters are picture scaling factor, active picture position, background color, flat panel sync mode, color space conversion mode, LCD panel output clock frequency and sync pulses, FIR filter coefficient values, switch on/off signals for various picture improvement filters, e.g. for a block noise artifact filter that eliminates low bit rate MPEG-artifacts. The controller also receives information on the progress within the frame processing, for example which line is currently being processed and if there are illegal input pixel values. The controller is also responsible for the output frame sequence synchronization, for example the controller makes sure that every 20 ms a new frame is generated, as it is required in a progressive scan PAL 50 Hz mode.

After performing the above mentioned video processing stages, the flat panel controller sends video data DV ready to be displayed to the flat panel display (not shown).

It is evident from the above description that the compressed video decoder 5 and the flat panel controller 13 have completely different purposes. Hence, the decoder and the controller are configured to different operation modes which is done by the use of the two different configuration controllers 4 and 12.

In some cases, the decoding system implemented in chip 2 and the flat panel control system implemented in chip 3 share configuration information CI. In such a case, one of the configuration controllers 4 and 12 may operate as a master and the other as a slave or, alternatively, both controllers may operate as slaves which are controlled by an external master controller.

The following disadvantages occur in the above described prior art apparatus 1:

The system uses duplicate resources, i.e. two separate memory devices 7 and 15 and two separate memory controllers 6 and 14 as well as two separate system configuration controllers 4 and 12.

Additional resources in the form of a video encoder 8 and a video decoder 9 are required in order to enable a data transmission between the decoding system 2 and the control system 3.

The prior art apparatus uses two separate chips 2 and 3, thus requiring extra pin count resulting in higher manufacturing costs for the chips and for the electronic circuits to be implemented. Consequently, the silicon die size is larger since the chip contains more gates, which leads to high implementation costs and higher power consumption. Additional computational power is required when the prior art apparatus is implemented as a software solution.

Additionally, the configuration mechanism of the prior art apparatus is complex due to the use of two separate configuration controllers working in different operation modes.

### SUMMARY OF THE INVENTION

According to the foregoing, it is an object of the present invention to overcome the disadvantages of the above described prior art apparatus and to provide an apparatus and a method for converting a compressed sequence of digital images into an uncompressed sequence of digital images to be displayed on a display which apparatus and method require less resources, resulting in less computational power and power consumption during operation and less manufacturing costs.

In order to achieve the aforementioned objects, the apparatus according to the invention includes decoding means for receiving and decoding a compressed first sequence of digital images and control means for receiving the decoded first sequence of digital images from the decoding means and processing the decoded first sequence of digital images into an uncompressed second sequence of digital images. The apparatus further comprises shared memory means for storing information from at least the decoding means, said shared memory means being accessible for both the decoding means and the control means during operation.

Due to the use of a shared memory for the decoding means and the control means, the apparatus of the invention requires fewer resources in comparison to prior art apparatuses which use two separate memories. Furthermore, as the control means receives and processes the decoded first sequence of digital images directly from the decoding means, there is no need for an additional video encoder and video decoder transmitting signals between the decoding means and the control means. Moreover, the apparatus according to the invention does not need a video analyzer detecting the video mode used, because the control means can access the video mode information directly from the decoded first sequence of images and/or the shared memory means.

In a preferred embodiment, the first and second sequences of digital images are video streams. Furthermore, the shared memory means is preferably adapted to store information from both the decoding means and the control means. Hence, the shared memory means is used as a storage medium in the decoding step performed in the decoding means as well as in the processing step of the control means and there is no need for further memory means, in contrast to the prior art.

In a further embodiment of the invention, the decoding means and the control means are connected to the shared memory means by a shared memory bus. Hence, the apparatus of this embodiment only needs a single shared memory bus for controlling the access to the shared memory means.

In a preferred embodiment, the apparatus of the invention comprises a memory controller for controlling the access to the memory means wherein the memory controller is preferably adapted to control the access to the memory means for both of the decoding means and the control means. Therefore, a single memory controller can be used for the shared memory means.

In a further embodiment, the apparatus comprises a configuration controller for controlling the operation of the apparatus, said configuration controller being preferably adapted to control the operation of both the decoding means and the control means. Therefore, a single configuration controller can be used resulting in less components compared to prior apparatuses. The configuration controller preferably configures the decoding means and the control means such that both means work in the same operation mode, thus facilitating the operation of the apparatus.

In a preferred embodiment of the invention, the apparatus is implemented on a single semiconductor chip, resulting in less pin count and gate count as well as in a smaller silicon die size which leads to a higher silicon yield and less power consumption. Furthermore, reducing the chip pin count leads to a less expensive chip package, a less expensive electronic circuit and printed circuit board. Furthermore, the computational power and the CPU power consumption of the system can be reduced.

In another preferred embodiment of the invention, the decoding means is adapted to decode a sequence of digital images compressed by an MPEG standard, particularly MPEG-4 AVC (AVC = Advanced Video Coding). This standard is equivalent to the ITU standard H.264. Preferably, the control means is adapted to process the decoded first sequence of digital images into a progressive scan video which is commonly used by flat panel displays.

Besides the aforementioned apparatus, the invention refers to a method for converting a compressed first sequence of digital images into an uncompressed second sequence of digital images to be displayed on a display, particularly on a flat panel display, comprising the following steps:
a) receiving and decoding the first sequence of digital images;
b) receiving the decoded first sequence of digital images and processing the decoded first sequence of digital images into the second sequence of digital images;
wherein information from at least the decoding step a) is stored in a shared memory means and wherein the shared memory means is accessed during both decoding step a) and processing step b).

According to the method of the invention, due to the use of a shared memory means, the decoded first sequence of digital images can be processed directly into the second sequence of digital images without using further video encoders and decoders as it is the case in prior art apparatuses. Therefore, the complexity of the method is greatly reduced compared to the prior art. Preferably, the first and second sequences of digital images used in the method of the invention are video streams. Furthermore, the shared memory means used in the method of the invention preferably stores information from both the decoding step a) and the processing step b). Hence, no further memory means has to be used in this preferred embodiment of the method according to the invention.

The invention further refers to a computer program product directly loadable into the internal memory of a digital computer, comprising software code portions for performing the steps of the aforementioned method when the product is run on a computer. Hence, the invention may also be implemented as a software solution instead of using hardware components.

### BRIEF DESCRIPTION OF THE DRAWINGS

Fig. 1 shows a block diagram illustrating an apparatus according to the prior art; and
Fig. 2 shows a block diagram illustrating an embodiment of the invention.

### DETAILED DESCRIPTION OF A PREFERRED EMBODIMENT

Fig. 1 shows a block diagram of a prior art apparatus discussed in detail in the above description of the related art.

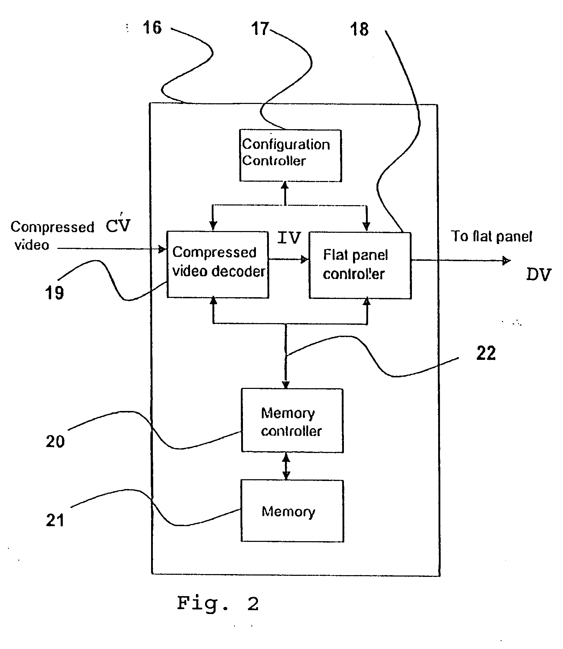

Fig. 2 shows a block diagram of an embodiment of the invention. The apparatus 16 shown in Fig. 2 is implemented in a single semiconductor chip and comprises a compressed video decoder 19 receiving a compressed video signal CV, for example a video coded by an MPEG standard. The compressed video decoder 19 decodes the signal into an uncompressed intermediate signal IV, which is directly fed to a flat panel controller 18. The apparatus comprises a single shared memory 21 used by the compressed video decoder 19 and the flat panel controller 18. The video decoder 19 and the flat panel controller 18 need a memory in order to perform the processing of the compressed video signal CV and the intermediate signal IV, respectively. Therefore, both the compressed video decoder 19 and the flat panel controller 18 have access to the memory 21. Furthermore, the flat panel controller 18 can access information from the compressed video decoder 19 stored in the memory 21 in order to perform direct processing of the signal IV.

The compressed video decoder 19 uses the memory for storing internal reference frames in the same way as in the state of the art decoder 5 in Fig. 1. Additionally, the compressed video decoder 19 stores the decoded uncompressed video frame in the memory 21 as well. The flat panel controller 18 reads the decoded uncompressed video from memory in order to process it to be displayed on a flat panel.

The shared memory 21 is controlled in the embodiment of Fig. 2 by a single shared memory bus 22 used by the compressed video decoder and by flat panel controller. Furthermore, a single memory controller 20 instead of several controllers is used for controlling the single shared memory 21. The memory controller substantially works in the same way as the memory controllers described with respect to the prior art apparatus of Fig. 1.

The apparatus shown in Fig. 2 uses a configuration controller 17 controlling the operation of the video decoder 19 and the flat panel controller 18. As the signal of the video decoder IV is processed directly by flat panel controller, a single configuration controller can be used to configure the operation of both the decoder and the flat panel controller. The use of a single configuration controller is an option in the present invention and not a mandatory feature. The configuration controller substantially performs the same operations as the controllers 4 and 12 described with respect to the prior art apparatus of Fig. 1. Furthermore, such a common controller has an advantage of shared information between the compressed video decoder 19 and the flat panel controller 18. For example, in the embedded compressed video stream there are indications on the video material source (film/camera mode). This information is read by the configuration controller 17 from the compressed video decoder 19 and fed back to the flat panel controller 18 in order to operate a better video de-interlacer. Another shared functionality is the bit error rate that is reported from the compressed video decoder 19 to the flat panel controller 18 via the configuration controller 17. This information is important to set different filter operation modes based on the artifacts that are caused due to different compression factors. Due to sharing of such information, there is no need for a mechanism in the flat panel controller 18 that will have to detect such modes from the video stream as it is the case in the prior art.

The flat panel controller 18 receives the signal IV and performs conventional processing steps in order to convert the signal into a video signal DV ready to be displayed on a flat panel display. Those processing steps have been discussed in the introductory part of the application and comprise de-interlacing, scaling and frame rate conversion. The video signal DV processed by the flat panel controller is thereafter displayed on a flat panel screen.

As discussed before, one of the main advantages of the apparatus is the combination of the compressed video decoder 19 and the flat panel controller 18 in a single apparatus while reducing computational power and saving significant implementation costs by reducing and sharing internal resources. Furthermore, when using a single chip for the apparatus, the power consumption, gate count, pin count and die size is reduced resulting in a cheaper and less complex structure of the apparatus.

### Reference List:

- 1: prior art apparatus
- 2: chip
- 3: chip
- 4: configuration controller
- 5: video decoder
- 6: memory controller
- 7: memory
- 8: video encoder
- 9: video decoder
- 10: video analyzer
- 11: memory
- 12: configuration controller
- 13: flat panel controller
- 14: memory controller
- 15: memory
- 16: embodiment of the invention
- 17: configuration controller
- 18: flat panel controller
- 19: video decoder
- 20: memory controller
- 21: memory
- 22: memory bus
- CV, CV': compressed video data
- UV: uncompressed video data
- IV: intermediate data
- DV: display video data
- CI: configuration information

## Claims

1. An apparatus (16) for converting a compressed first sequence of digital images (CV) into an uncompressed second sequence of digital images (DV) to be displayed on a display, particularly on a flat panel display, comprising:
decoding means (19) for receiving and decoding the first sequence of digital images (CV);
control means (18) for receiving the decoded first sequence of digital images (IV) from the decoding means (19) and processing the decoded first sequence of digital images (IV) into the second sequence of digital images (DV);
shared memory means (21) for storing information from at least the decoding means (19), the shared memory means (21) being accessible for both the decoding means (19) and the control means (18) during operation.

2. The apparatus according to claim 1, wherein the first and second sequences of digital images (CV, DV) are video streams.

3. The apparatus according to claim 1 or 2, wherein the shared memory means (21) is adapted to store information from both the decoding means (19) and the control means (18).

4. The apparatus according to one of the preceding claims, wherein the decoding means (19) and the control means (18) are connected to the shared memory means (21) by a shared memory bus (22).

5. The apparatus according to one of the preceding claims, comprising a memory controller (20) for controlling the access to the shared memory means (21).

6. The apparatus according to claim 5, wherein the memory controller (20) is adapted to control the access to the shared memory means (21) for both the decoding means (19) and the control means (18).

7. The apparatus according to one of the preceding claims, comprising a configuration controller (17) for controlling the operation of the apparatus (16).

8. The apparatus according to claim 7, wherein the configuration controller (17) is adapted to control the operation of both the decoding means (19) and the control means (18).

9. The apparatus according to claim 7 or 8, wherein the decoding means (19) and the control means (18) are configured to work in the same operation mode by the configuration controller (17).

10. The apparatus according to one of the preceding claims, wherein the apparatus (16) is implemented on a single semiconductor chip.

11. The apparatus according to one of the preceding claims, wherein the decoding means (19) is adapted to decode a sequence of digital images (CV) compressed by a MPEG standard, particularly MPEG-4 AVC.

12. The apparatus according to one of the preceding claims, wherein the control means (18) is adapted to process the decoded first sequence of digital images (IV) into a progressive scan video.

13. A method for converting a compressed first sequence of digital images (CV) into an uncompressed second sequence of digital images (DV) to be displayed on a display, particularly on a flat panel display, comprising the following steps:
a) receiving and decoding the first sequence of digital images (CV) ;
b) receiving the decoded first sequence of digital images (IV) and processing the decoded first sequence of digital images (IV) into the second sequence of digital images (DV) ;
wherein information from at least the decoding step a) is stored in a shared memory means (21) and wherein the shared memory means (21) is accessed during both decoding step a) and processing step b).

14. The method according to claim 13, wherein the first and second sequences of digital images (CV, DV) are video streams.

15. The method according to claim 13 or 14, wherein information from both decoding step a) and processing step b) is stored in the shared memory means (21).

16. A computer program product directly loadable into the internal memory of a digital computer, comprising software code portions for performing the steps of one of claims 13 to 15 when said product is run on a computer.
